# EUROPEAN PATENT SPECIFICATION

(11) **EP 0 346 065 B1**
(45) Date of publication and mention of the grant of the patent: **17.08.1994**
(21) Application number: 89305684.6
(22) Date of filing: 06.06.1989
(51) Int. Cl.: C07F 13/00

(54) **Thioacid rhenium sulfide dimer compositions and their preparation**
Thiosäure-rhenium-sulfid-dimer-Zusammensetzung und ihre Herstellung
Compositions dimères thioacides de sulfure de rhénium et leur préparation

(30) Priority: 06.06.1988 US 202341
(43) Date of publication of application: 13.12.1989
(73) Proprietor: EXXON RESEARCH AND ENGINEERING COMPANY, Florham Park, New Jersey 07932-0390 (US)
(72) Inventor: Halbert, Thomas Risher, Annandale New Jersey 08801 (US); Stiefel, Edward Ira, Bridgewater New Jersey 08807 (US); Wei, Liwen, Somerville New Jersey 08876 (US)
(74) Representative: Somers, Harold Arnold

(56) References cited:
- JOURNAL OF THE AMERICAN CHEMICAL SOCIETY, vol. 89, no. 6, 15th March 1967, pages 1346-1351; D. COUCOUVANIS et al.: "Sulfur chelates. IV. Sulfur addition to dithiolato complexes of nickel(II)"

## Description

### FIELD OF THE INVENTION

This invention relates to novel neutral dimeric rhenium dithioacid complexes and their method of preparation.

### BACKGROUND OF THE INVENTION

Various rhenium dithiocarbamate complexes have been reported in the literature. (See, for example, Rowbottom et al., J. Chem. Soc. Dalton, 1972, pp. 826-830; Rowbottom et al., J. Chem. Soc. Dalton, 1974, pp. 684-689; Fletcher et al., J. Chem. Soc. Dalton, 1974, pp. 486-489; Gorden et al., Inorg. Chem., 1983, 22, pp. 157-167, and Colton et al., J. Chem. Soc., 1960, pp. 5275-5276.

None of these references disclose a rhenium dithioacid complex containing bridging sulfido ligands in a core similar to that which constitutes an essential feature of this invention.

### SUMMARY OF THE INVENTION

Briefly stated, the present invention encompasses a new class of rhenium dithioacid complexes and their method of preparation. The complexes have the general formula [L₂Re(µ-S)]₂ wherein L is a dithioacid or similar ligand, and µ denotes the fact that the sulfur atoms in the core of the complex bridge the two rhenium atoms in the complex. Thus, the core structure for such typical compounds is generally of the form: 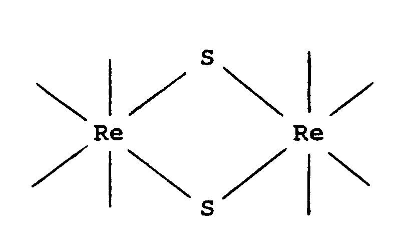
where the dangling valences represent coordination by the ligands, L.

The compositions are made by reacting tetrathioperrhenate salts such as tetraalkyl ammonium tetrathioperrhenate, with a disulfide which upon reduction gives a 1,1-dithiolate ligand.

The compositions are useful as catalysts and catalyst precursors used, for example, in the catalytic dehydropolymerization of tetrahydroquinoline.

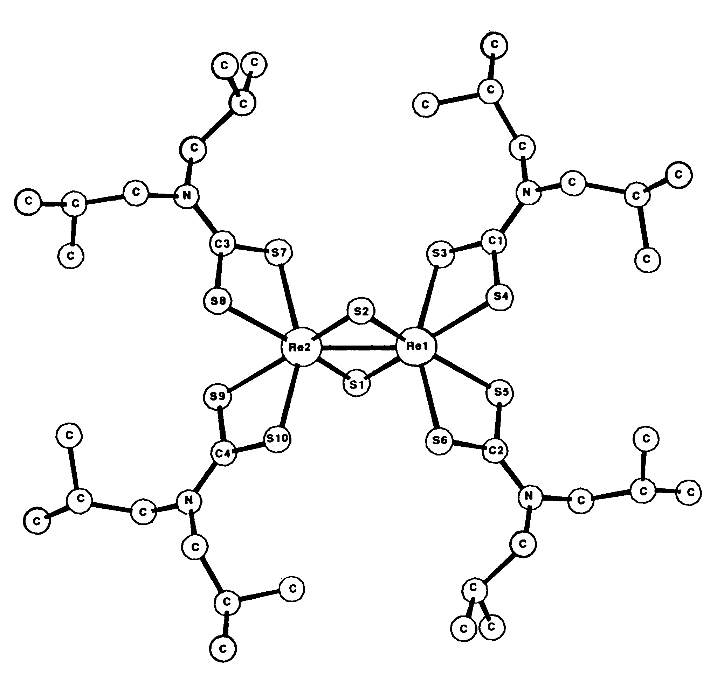

### BRIEF DESCRIPTION OF THE DRAWING

The sole Figure is a depiction of the molecular structure, with the hydrogen atoms omitted, of a complex according to the invention in which the ligand L is diethyldithiocarbamate. In the Figure a labeling scheme is included to designate relative positions of certain individual atoms.

### DETAILED DESCRIPTION OF THE INVENTION

The neutral dimeric rhenium dithioacid complexes of the present invention may be represented by the formula [L₂Re(µ-S)]₂ wherein L is 1,1-dithioacid ligand which may be a dithiocarbamate, xanthate, dithiophosphate, dithiophosphinate, or other similar ligand, and wherein µ denotes the fact that the sulfur atoms in the core of the complex bridge the two rhenium atoms. The preferred ligand is a dithiocarbamate (S₂CNR₂) wherein R is independently a hydrogen or C₁-C₂₄ branched, linear or cycloalkyl group, e.g. preferably methyl, ethyl, n-propyl isopropyl, butyl, isobutyl, t-butyl, or the like; a C₆-C₂₄ aryl, alkyl aryl or aralkyl group or wherein NR₂ is a morpholino group. The ligands preferably are all of the same type; however, such is not absolutely necessary.

The compounds of the present invention can be represented by the following general structure: 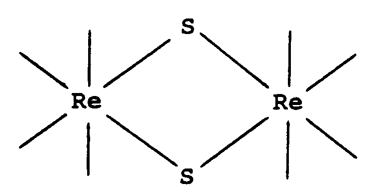
wherein the dangling valences are associated with a ligand L, as defined above.

As indicated, the preferred ligand L is a dithiocarbamate, and in such instance the dimer will have the following structure: 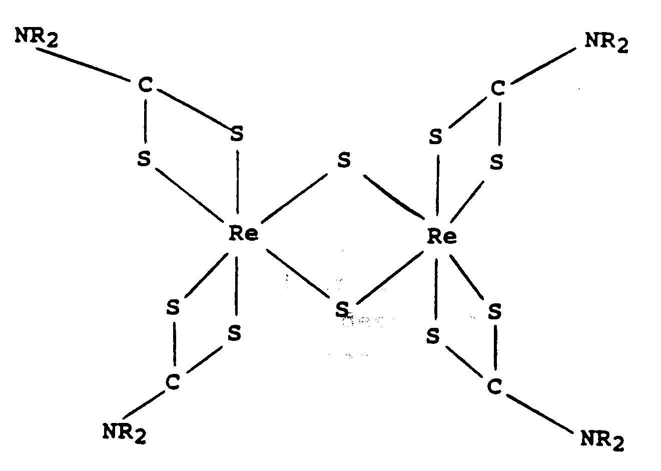
These compositions may be made by reacting a tetrathioperrhenate salt, MReS₄, with a disulfide which upon reduction gives a 1,1-dithiolate ligand. Preferably, the cation M in the salt MReS₄ is selected from quaternary ammonium, phosphonium and arsonium groups, and especially tetralkyl ammonium groups. Examples of such cations include tetraethyl ammonium, tetraphenyl phosphonium ion, tetraphenyl arsonium ion and the like.

The preparation of tetrathioperrhenate salts is known and forms no part of this invention.

In general, it is preferred to carry out the reaction of the tetrathioperrhenate salt with the disulfide of the appropriate ligand in a solution of an organic solvent. Typical solvents include acetonitrile, dichloromethane, tetrahydrofuran and toluene. Acetonitrile is particularly preferred. Basically, the reactant are mixed for a time sufficient for the formation of the complex. Indeed, the extent of reaction can be visually estimated by noting the amount of solid precipitated from the solution.

In general, the reaction can be conducted at room temperature and pressure. Preferably, the reaction is carried out under inert atmosphere, although this is not required.

The following examples illustrate the present invention.

### EXAMPLES

### Example 1

Tetraethylammonium tetrathioperrhenate (0.25 g, 0.56 mmole) and tetraethylthiuramdisulfide (0.417 g, 1.41 mmole) were dissolved in 30 ml of deaerated acetonitrile. The resulting deep violet solution was stirred under inert atmosphere at room temperature for 18 hours, at which point a green precipitate was separated by filtration, washed with diethylether, and air dried to yield 0.325 g product. The product was characterized by infrared and electronic spectroscopy and single crystal X-ray diffraction analysis. The IR spectral analysis show absorbances in the range of 600, to 250 cm⁻¹ which are characteristic of bridging sulfido ligands and R₂NCS₂-ligands bound to rhenium.

The single crystal X-ray diffraction analysis was carried out as follows:
Single crystals of [(C₂H₅)₂NHS₂]₄Re₂(µ-S)₂ suitable for X-ray diffraction analysis were grown by diffusion of diethylether into a dichloromethane solution of the complex. One crystal was selected and mounted on a computer-controlled Nicolet Autodiffractometer equipped with graphite monochromatized MoK_{α} (λ = 0.71073 Å) radiation source. The crystal was found to be monoclinic, space group P2₁/c, with lattice constants a = 11.084(2), b 13.815(3), c = 19.945(4) Å, β = 92.23(2)°. Cell volume is 3052(2) Å³, Z = 2, and the density is 1.522 gm/cm⁻³. A total of 5571 reflections were recorded, and the structure determined from the intensities of these reflections following known procedures.

As illustrated in the Figure, a molecule of Re₂(µ-S)₂[(C₂H₅)₂NCS₂]₄ contains 2 Re atoms bridged by 2 S²⁻ ligands. A crystallographic inversion center lies midway between the 2 Re atoms in the crystal studied. Each Re is also coordinated by 2 dithiocarbamate ligands, such that the Re atom is bound to a total of 6 S atoms (4 from the 2 dithiocarbamates, and 2 from the bridging sulfides). Selected bond lengths and angles characteristic of the rhenium dimer are given in Table I:

**Table I**

| Bond | Length (Å) | Bond | Angle (°) |
|---|---|---|---|
| Re₁-Re₂ | 2.546(1) | Re₁-S₁-Re₂ | 68.1(1) |
| Re₁-S₁ | 2.275(3) | S₅-Re₁-S₆ | 70.6(1) |
| Re₁-S₅ | 2.511(3) | S₁-Re₁-S₂ | 111.9(1) |
| Re₁-S₆ | 2.430(3) | S₁₀-Re₂-S₉ | 70.5(1) |

### Examples 2, 3, 4, and 5

In these examples, the procedure of Example 1 was followed except that R in the dithioacid ((R₂NCS₂)₂) used was either methyl, isopropyl, or butyl rather than ethyl as in Example 1. In one instance the dithioacid was morpholino. IR spectral data for the products (including the diethyl dithiocarbamate complex of Example 1) are tabulated in the table which follows:

**Table 2**

| Example | Dithiocarbamate | Wave Number (cm⁻¹) |
|---|---|---|
| 1 | Dimethyl dithiocarbamate | 2920(W)*, 1520(S), 1385(S), 1385(S), 1250(M), 1040(S), 980(M), 460(W), 420(M), 355(W) |
| 2 | Diethyl dithiocarbamate | 2960(M), 2920(M), 1495(S), 1460(M), 1430(S), 1355(M), 1270(S), 1210(M), 1150(S), 1070(M), 1000(M), 920(M), 850(M), 780(M), 605(W), 570(W), 425(M), 355(W) |
| 3 | Diisopropyldithiocarbamate | 2960(M), 1480(S), 1450(M), 1440(M), 1365(M), 1325(S), 1190(M), 1140(S), 1040(M), 850(W), 800(W), 850(M), 420(M), 370(W) |
| 4 | Diisobutyldithiocarbamate | 2960(S), 2920(M), 2860(M), 1485(S), 1460(M), 1420(S), 1385(M), 1350(M), 1335(M), 1245(S), 1200(M), 1150(S), 980(W), 940(W), 880(W), 820(W), 625(W), 440(M), 350(W) |
| 5 | 1-moryholine dithiocarbamate | 2960(W), 2900(W), 2860(W), 1490(S), 1430(S), 1300(W), 1270(M), 1230(S), 1120(S), 1025(S), 1000(M), 885(M), 830(W), 670(W), 545(M), 430(M), 530(W) |
| Notes 1 Å(Ångstrom unit) = 0.1 nm | | |

## Claims

1. A composition of matter having the formula [L₂Re(µ-S)]₂ wherein L is a 1,1-dithioacid and µ denotes that the sulfur atoms in the core of the composition bridge the rhenium atoms in the composition.

2. The composition of claim 1 wherein L is selected from dithiocarbamates, xanthates, dithiophosphates, dithiophosphinates and mixtures thereof.

3. The composition of claim 2 wherein L is a dithiocarbamate of the formula S₂CNR₂ and R is independently H, a C₁ to C₂₄ alkyl or cycloalkyl group, a C₆ to C₂₄ aryl, alkyl aryl or aralkyl group, or NR₂ is a morpholino group.

4. The composition of claim 3 wherein R is an alkyl group.

5. A method of preparing a composition of the formula [L₂Re(µ-S) ]₂ wherein L is a 1,1-dithioacid and µ signifies that the sulfur atoms in the core of the composition bridge the rhenium atoms therein, comprising: mixing a non-aqueous solution of a tetrathioperrhenate with disulfide which upon reduction gives a 1,1-dithiolate ligand, said mixing being for a time sufficient to form the composition.

6. The method of claim 5 wherein said mixing is conducted at ambient temperature.

7. The method of claim 5 or claim 6 wherein said non-aqueous solution is an acetonitrile solution.

8. The method of any one of claims 5 to 7 wherein said disulfide is selected from dithiocarbamates, xanthates, dithiophosphates, dithiophosphinates and mixtures thereof.

## Patentansprüche

1. Zusammensetzung mit der Formel [L₂Re(µ-S)]₂, bei der L eine 1,1-Dithiosäure ist und µ bedeutet, daß die Schwefelatome im Kern der Zusammensetzung die Rheniumatome in der Zusammensetzung verbrücken.

2. Zusammensetzung nach Anspruch 1, bei der L ausgewählt ist aus Dithiocarbamaten, Xanthaten, Dithiophosphaten, Dithiophosphinaten und Mischungen daraus.

3. Zusammensetzung nach Anspruch 2, bei der L ein Dithiocarbamat mit der Formel S₂CNR₂ ist und R unabhängig H, eine C₁-bis C₂₄-Alkyl- oder Cycloalkylgruppe, eine C₆- bis C₂₄-Aryl-, Alkylaryl- oder Aralkylgruppe ist oder NR₂ eine Morpholingruppe ist.

4. Zusammensetzung nach Anspruch 3, bei der R eine Alkylgruppe ist.

5. Verfahren zur Herstellung einer Zusammensetzung mit der Formel [L₂Re(µ-S)]₂, bei der L eine 1,1-Dithiosäure ist und µ bedeutet, daß die Schwefelatome im Kern der Zusammensetzung die Rheniumatome in der Zusammensetzung verbrücken, bei dem eine nicht wäßrige Lösung eines Tetrathioperrhenats mit Disulfid gemischt wird, das nach Reduktion einen 1,1-Dithiolatliganden ergibt, wobei das Mischen für eine ausreichende Zeit erfolgt, um die Zusammensetzung zu bilden.

6. Verfahren nach Anspruch 5, bei dem das Mischen bei Umgebungstemperatur durchgeführt wird.

7. Verfahren nach Anspruch 5 oder Anspruch 6, bei dem die nicht wäßrige Lösung eine Acetonitrillösung ist.

8. Verfahren nach einem der Ansprüche 5 bis 7, bei dem das Disulfid ausgewählt ist aus Dithiocarbamaten, Xanthaten, Dithiophosphaten, Dithiophosphinaten und Mischungen daraus.

## Revendications

1. Composition de matière ayant pour formule [L₂Re(µ-S)]₂ dans laquelle L est un 1,1-dithioacide et µ indique que les atomes de soufre du noyau de la composition relient les atomes de rhénium de la composition.

2. Composition selon la revendication 1, dans laquelle L est choisi parmi les dithiocarbamates, les xanthates, les dithiophosphates, les dithiophosphinates et leurs mélanges.

3. Composition selon la revendication 2, dans laquelle L est un dithiocarbamate de formule S₂CNR₂ et R est indépendamment H, un groupe alkyle ou cycloalkyle en C₁-C₂₄, un groupe aryle, alkyl aryle ou aralkyle en C₆-C₂₄, ou NR₂ est un groupe morpholino.

4. Composition selon la revendication 3, dans laquelle R est un groupe alkyle.

5. Procédé de préparation d'une composition de formule [L₂Re(µ-S)]₂ dans laquelle L est un 1,1-dithioacide et µ indique que les atomes de soufre du noyau de la composition relient les atomes de rhénium de la composition, consistant à mélanger une solution non aqueuse d'un tétrathioperrhénate avec un disulfure qui, par réduction, donne un ligand de 1,1-dithiolate, ledit mélange se faisant pendant une période suffisante pour former la composition.

6. Procédé selon la revendication 5, dans lequel ledit mélange est réalisé à température ambiante.

7. Procédé selon la revendication 5 ou 6, dans lequel ladite solution non aqueuse est une solution d'acétonitrile.

8. Procédé selon l'une quelconque des revendications 5 à 7, caractérisé en ce que ledit disulfure est choisi parmi les dithiocarbamates, les xanthates, les dithiophosphates, les dithiophosphinates et leurs mélanges.
